# EUROPÄISCHE PATENTSCHRIFT

(11) **EP 2 407 606 B1**
(45) Veröffentlichungstag und Bekanntmachung des Hinweises auf die Patenterteilung: **26.07.2017**
(21) Anmeldenummer: 11163293.1
(22) Anmeldetag: 20.04.2011
(51) Int. Cl.: E04F 13/08, E04F 13/16, E04B 2/72, E04B 9/22, F16B 19/04, F16B 19/10, E04F 13/10, F16B 5/04, E04B 9/24, E04B 2/74, E04B 2/00, E04B 9/00

(54) **System und Verfahren zum Befestigen eines Paneels auf einer Wandunterkonstruktion/Deckenunterkonstruktion**
System and method for fixing a panel to a wall substructure/ceiling substructure
Système et procédé de fixation d'un panneau sur une sous-structure de mur/de plafond

(30) Priorität: 15.07.2010 DE 102010027236
(43) Veröffentlichungstag der Anmeldung: 18.01.2012
(73) Patentinhaber: Eternit GmbH, 69126 Heidelberg (DE)
(72) Erfinder: ROSENAU, Britta, Dr., 16816 Neuruppin (DE)
(74) Vertreter: Vaeck, Elke

(56) Entgegenhaltungen:
- CH-A5- 692 750

## Beschreibung

Die Erfindung betrifft ein System zum Befestigen eines Paneels auf einer Wand- oder Deckenunterkonstruktion aus Metallprofilen mittels Blindnieten in fluchtenden Bohrungen des Paneels und der Metallprofile an konstruktiv vorgegebenen Festpunkten und Lospunkten.

Der Begriff "Paneel" wird nachfolgend als Oberbegriff für Tafeln und Platten aus Materialien wie Faserzement, Gipskarton, Holz usw. verwendet. Solche Paneele werden in großem Umfang im Trockenbau sowie zur Verkleidung von Innen- und Außenwänden sowie Decken in unterschiedlichen Dicken verwendet.

Eine bekannte Befestigungstechnik besteht darin, das Paneel an den vorgesehenen Festpunkten mit Bohrungen eines ersten Durchmessers und an den vorgesehenen Lospunkten mit Bohrungen eines zweiten, größeren Durchmessers zu versehen. Zur Befestigung in den Festpunkten und den Lospunkten dienen spezielle Blindniete mit einer integralen, d.h. fest auf dem Nietschaft sitzenden Hülse mit einem Durchmesser, der nahezu gleich dem Durchmesser der Festpunktbohrungen ist. Zwischen der Hülse und der größeren Bohrung für die Lospunkte verbleibt somit ein Ringspalt zur Aufnahme von Dehnungen des Paneels, die insbesondere durch Wärme und/oder absorbierte Feuchtigkeit entstehen können. Nachteilig ist, dass die Paneele an genau vorgegebenen Punkten mit diesen Bohrungen unterschiedlichen Durchmessers versehen werden müssen.

Diesen Nachteil vermeidet ein aus der CH 692750 A5 bekanntes Befestigungsverfahren, bei dem alle Bohrungen des Paneels den gleichen, großen Durchmesser haben, der für die Aufnahme von Dilatationen des Paneels in den Lospunkten bemessen ist. Für die Festpunkte werden deshalb Blindniete verwendet, auf deren Schaft eine Hülse aufgeschoben ist, deren Außendurchmesser gleich dem großen Bohrungsdurchmesser und deren Länge kleiner als die Dicke des Paneels ist, so dass die Hülse lediglich die betreffende Festpunktbohrung ausfüttert. An den Lospunkten wird der gleiche Blindniet ohne Hülse gesetzt. Diese Art der Befestigung hat den Nachteil, dass die in der Regel dünnwandigen Metallprofile der Unterkonstruktion sich um das Bohrloch herum beim Setzen des Niets in Richtung des Paneels trichterartig verformen können. Dadurch verringert sich der Auszugswiderstand des Blindniets. Auch kann es zu einer unerwünschten reibschlüssigen Verspannung des Paneels mit der Unterkonstruktion an den Lospunkten kommen.

Der Erfindung liegt die Aufgabe zugrunde, diese Nachteile des zuletzt genannten Systems und Befestigungsverfahrens zu vermeiden.

Erfindungsgemäß gelingt dies mit einem System mit den Merkmalen des Anspruches 1 und mit einem Verfahren mit den Merkmalen des Anspruches 4 insbesondere dadurch, dass auf dem Schaft jedes für einen Lospunkt bestimmten Blindniets eine zweite Hülse mit einem Außendurchmesser, der kleiner als der Durchmesser der Bohrungen des Paneels ist, sitzt, und dass die Länge der ersten Hülsen für die Festpunkte und der zweiten Hülsen für die Lospunkte jeweils mindestens gleich der Dicke des Paneels ist.

Das entsprechende Verfahren zum Befestigen eines Paneels auf einer Unterkonstruktion aus Metallprofilen hat mit dem bisher bekannten Verfahren die folgenden Schritte gemeinsam:
- das Paneel wird an konstruktiv vorgegebenen Festpunkten und Lospunkten mit Bohrungen gleichen Durchmessers zum Setzen von Blindnieten versehen, wobei der Durchmesser aller Bohrungen gleich dem für die Lospunkte festgelegten Durchmesser ist,
- auf den Schaft jedes für einen Festpunkt bestimmten Blindniets wird eine die Bohrung ausfutternde erste Hülse aufgeschoben, unterscheidet sich jedoch erfindungsgemäß dadurch, dass
- auf den Schaft jedes für einen Lospunkt bestimmten Niets eine zweite Hülse mit einem Außendurchmesser, der kleiner als der Durchmesser der Bohrung des Paneels ist, aufgeschoben wird, und dass
- die Länge der ersten Hülsen für die Festpunkte und der zweiten Hülsen für die Lospunkte jeweils mindestens gleich der Dicke des Paneels ist.

Infolgedessen kann einerseits auf die Verwendung von speziellen Blindnieten mit integraler Hülse verzichtet, andererseits jedoch eine schwimmende Festlegung des Paneels in den Lospunkten sichergestellt werden, ohne dass das Risiko besteht, dass die Unterkonstruktion im Bereich der Lospunkte durch den Nietprozess festigkeitsmäßig leidet.

In den Unteransprüchen sind bevorzugte Ausführungsformen und Weiterbildungen des vorgeschlagenen Systems und Verfahrens angegeben.

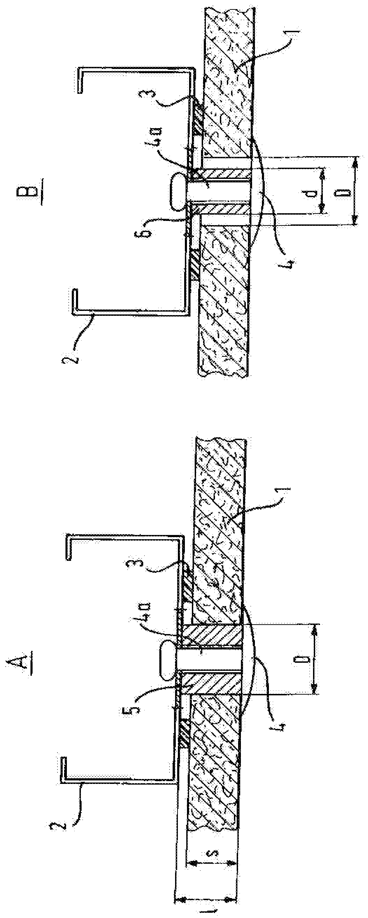

Die Erfindung wird nachfolgend anhand der Zeichnung erläutert, die eine Befestigung in einem Festpunkt und in einem Lospunkt veranschaulicht. Aus Gründen der Deutlichkeit ist die Zeichnung nicht maßstäblich.

Ein Paneel 1, z.B. aus Faserzement mit einer Dicke von 8 mm ist an dünnwandigen Blechprofilen 2, z.B. CD 0,6 mm-Profilen, befestigt, wie sie u.a. als Unterkonstruktion im Trockenbau üblich sind. Die dargestellten Kunststoffstreifen 3 zwischen dem jeweiligen Mittelschenkel der C-Profile 2 und der zugewandten (Rück-)Seite des Paneels 1 sind optional.

In der Zeichnung ist links ein Schnitt durch einen Festpunkt A und rechts ein Schnitt durch einen Lospunkt B dargestellt. Das Paneel 1 hat im Festpunkt A und im Lospunkt B Bohrungen gleichen Durchmessers D. Zur Befestigung dienen identische, handelsübliche Blindniete 4. Zum zentrischen Setzen der Blindniete 4 werden die Blechprofile 2 unter Verwendung einer Bohrlehre vorgebohrt.

Im Festpunkt A ist auf den Schaft 4a des Blindniets 4 eine erste Hülse 5 aufgeschoben, deren Außendurchmesser gleich dem Durchmesser D der Bohrung ist. In dem Lospunkt B ist auf den Schaft 4a des Blindniets 4 eine zweite Hülse 6 mit einem erheblich kleineren Außendurchmesser d aufgeschoben. Die Wanddicke der zweiten Hülse 6 ist jedoch so bemessen, dass sie beim Setzen des Niets 4 nicht nennenswert gestaucht wird.

Die Hülsen 5 und 6, die vorzugsweise aus einer geeigneten Edelstahlsorte hergestellt sind, haben die gleiche Länge 1, die gleich der Dicke s des Paneels 1 zuzüglich des infolge der Kunststoffstreifen 3 verbleibenden Spalts zwischen dem mittleren Schenkel der C-Profile 2 und der entsprechenden Fläche des Paneels 1 ist. Bei einer Befestigung ohne die Kunststoffstreifen 3 ist hingegen die Länge der Hülsen 5, 6 gleich der Dicke s des Paneels 1.

## Patentansprüche

1. System zum Befestigen eines Paneels (1) auf einer Unterkonstruktion aus Metallprofilen (2) mittels Blindnieten (4) in fluchtenden Bohrungen des Paneels (1) und der Metallprofile (2) an konstruktiv vorgegebenen Festpunkten (A) und Lospunkten (B), wobei der Durchmesser (D) aller Bohrungen des Paneels (1) gleich dem für die Lospunkte (B) festgelegten Durchmesser ist und die Bohrungen an den Festpunkten (A) mittels einer auf dem Schaft (4a) des Blindniets (4) sitzenden ersten Hülse (5) ausgefüttert sind, und die Länge (2) der ersten Hülsen (5) für die Festpunkte (A) mindestens gleich der Dicke (s) des Paneels ist,
**dadurch gekennzeichnet, dass**
auf dem Schaft (4a) jedes für einen Lospunkt (B) bestimmten Blindniets (4) eine zweite Hülse (6) mit einem Außendurchmesser (d), der kleiner als der Durchmesser (D) der Bohrungen des Paneels (1) ist, sitzt und dass die Länge der zweiten Hülsen (6) für die Lospunkte (B) mindestens gleich der Dicke (s) des Paneels (1) ist.

2. System nach Anspruch 1, wobei die Länge (2) der ersten und zweiten Hülsen (5, 6) gleich der Dicke (s) des Paneels zuzüglich der Dicke eines Unterlegstreifens (3) zwischen dem Metallprofil (2) und dem Paneel (1) ist.

3. System nach Anspruch 1 oder 2, wobei der Werkstoff der ersten und zweiten Hülsen (5, 6) aus einem Edelstahl ist und deren Wanddicken so gewählt sind, dass eine Stauchung der ersten und zweiten Hülsen (5, 6) während des Setzens der Blindniete (4) weitgehend vermieden wird.

4. Verfahren zum Befestigen eines Paneels (1) auf einer Unterkonstruktion aus Metallprofilen (2), mit den Schritten:
- das Paneel (1) wird an konstruktiv vorgegebenen Festpunkten (A) und Lospunkten (B) mit Bohrungen gleichen Durchmessers (D) zum Setzen von Blindnieten (4) versehen, wobei der Durchmesser (D) aller Bohrungen gleich dem für die Lospunkte (B) festgelegten Durchmesser ist,
- auf den Schaft (4a) jedes für einen Festpunkt (A) bestimmten Blindniets (4) wird eine die Bohrung ausfütternde erste Hülse (5) aufgeschoben, und
- auf den Schaft (4a) jedes für einen Lospunkt (B) bestimmten Niets (4) wird eine zweite Hülse (6) mit einem Außendurchmesser (d), der kleiner als der Durchmesser (D) der Bohrung des Paneels (1) ist, aufgeschoben,
- wobei die Länge (1) der ersten Hülsen (5) und der zweiten Hülsen (6) jeweils mindestens gleich der Dicke (s) des Paneels (1) ist.

5. Verfahren nach Anspruch 5, wobei die Länge (1) der ersten und zweiten Hülsen (5, 6) gleich der Dicke (s) des Paneels (1) zuzüglich der Dicke eines etwaigen Unterlegstreifens (3) zwischen dem Metallprofil (2) und dem Paneel (1) gewählt wird.

6. Verfahren nach Anspruch 4 oder 5, wobei der Werkstoff der ersten und zweiten Hülsen (5, 6) und deren Wanddicke so gewählt werden, dass eine Stauchung der Hülsen (5, 6) während des Setzens der Blindniete (4) weitgehend vermieden wird.

7. Verfahren nach einem der Ansprüche 4 bis 6, wobei als erste und zweite Hülsen (5, 6) solche aus einem Edelstahl verwendet werden.

## Claims

1. System for fastening a panel (1) to a substructure consisting of metal profiles (2) by means of blind rivets (4) in aligned holes in the panel (1) and in the metal profiles (2) at structurally predetermined anchor points (A) and loose points (B), the diameter (D) of all the holes in the panel (1) being equal to the diameter specified for the loose points (B), and the holes at the anchor points (A) being lined by a first sleeve (5) that rests on the shank (4a) of the blind rivet (4),
and the length (2) of the first sleeves (5) for the anchor points (A) being at least equal to the thickness (s) of the panel, **characterised in that**
a second sleeve (6) having an outer diameter (d) that is smaller than the diameter (D) of the holes in the panel (1) rests on the shank (4a) of each blind rivet (4) intended for a loose point (B), and **in that** the length of the second sleeves (6) for the loose points (B) is at least equal to the thickness (s) of the panel (1).

2. System according to claim 1, wherein the length (2) of the first and second sleeves (5, 6) is equal to the thickness (s) of the panel plus the thickness of a supporting strip (3) between the metal profile (2) and the panel (1).

3. System according to either claim 1 or claim 2, wherein the material of the first and second sleeves (5, 6) is made of a stainless steel, and the wall thicknesses thereof are selected such that the first and second sleeves (5, 6) are largely prevented from compressing when the blind rivets (4) are being set.

4. Method for fastening a panel (1) to a substructure consisting of metal profiles (2), comprising the steps of:
- providing the panel (1) with holes having equal diameter (D) for setting blind rivets (4) at structurally predetermined anchor points (A) and loose points (B), the diameter (D) of all the holes being equal to the diameter specified for the loose points (B),
- sliding a first sleeve (5) that lines the hole onto the shank (4a) of each blind rivet (4) intended for an anchor point (A), and
- sliding a second sleeve (6) having an outer diameter (d) that is smaller than the diameter (D) of the hole in the panel (1) onto the shank (4a) of each rivet (4) intended for a loose point (B),
- wherein the length (l) of the first sleeves (5) and the second sleeves (6) is in each case at least equal to the thickness (s) of the panel (1).

5. Method according to claim 5, wherein the length (l) of the first and second sleeves (5, 6) is selected so as to be equal to the thickness (s) of the panel (1) plus the thickness of any supporting strip (3) between the metal profile (2) and the panel (1).

6. Method according to either claim 4 or claim 5, wherein the material of the first and second sleeves (5, 6) and the wall thickness thereof are selected such that the sleeves (5, 6) are largely prevented from compressing when the blind rivets (4) are being set.

7. Method according to any of claims 4 to 6, wherein sleeves made of a stainless steel are used as the first and second sleeves (5, 6).

## Revendications

1. Système de fixation d 'un panneau (1) à une sous-structure de profilés (2) métalliques au moyen de rivets (4) aveugles dans des trous en alignement du panneau (1) et des profilés (2) métalliques en des points (A) fixes et en des points (B) détachables donnés à 1 'avance par construction , le diamètre (D) de tous les trous du panneau (1) étant égal au diamètre fixé pour les points (B) détachables et les trous aux points (A) fixes étant garnis au moyen d'une première douille (5) mise sur le fût (4a) du rivet (4) aveugle ,
et la longueur (2) des premières douilles (5) pour les points (A) fixes étant au moins égale à 1 'épaisseur (s) du panneau , **caractérisé en ce qu** 'est mise , sur le fût (4a) de chaque rivet (4) aveugle destiné à un point (B) détachable , une deuxième douille (6) d 'un diamètre (d) extérieur plus petit que le diamètre (D) des trous du panneau (1) et **en ce que** la longueur des deuxièmes douilles (6) pour les trous (B) détachables est au moins égale à 1 'épaisseur (s) du panneau (1).

2. Système suivant la revendication 1, dans lequel la longueur des premières et deuxièmes douilles (5 , 6) est égale à 1 'épaisseur (s) du panneau additionnée de 1 'épaisseur d 'une bande (3) sous-jacente entre le profilé (2) métallique et le panneau (1) .

3. Système suivant la revendication 1 ou 2 , dans lequel le matériau des premières et deuxièmes douilles (5 , 6) est 1 'acier fin et leur épaisseur de paroi est choisie de manière à empêcher dans une grande mesure un écrasement des premières et deuxièmes douilles (5 , 6) pendant la pose des rivets (4) aveugles.

4. Procédé de fixation d 'un panneau (1) à une sous-structure de profilé (2) métallique , comprenant les stades :
- on munit le panneau (1) en des points (A) fixes et en des points (B) détachables donnés à 1 'avance par construction de trous de même diamètre (D) pour la pose de rivets (4) aveugles , le diamètre (d) de tous les trous étant égal au diamètre fixé pour les points (B) détachables ,
- on enfile sur le fût (4a) de chaque rivet (4) aveugle destiné à un point (A) fixe une première douille (5) garnissant le trou et
- on enfile sur le fût (4a) de chaque rivet (4) destiné à un point (B) détachable une deuxième douille (6) d 'un diamètre (d) extérieur plus petit que le diamètre (D) du trou du panneau (1),
- dans lequel la longueur des premières douilles (5) et des deuxièmes douilles (6) est au moins égale à 1 'épaisseur (s) du panneau (1).

5. Procédé suivant la revendication 4 , dans lequel on choisit la longueur (L) des premières et des deuxièmes douilles (5 , 6) égale à 1 'épaisseur (s) du panneau (1) additionnée de 1 'épaisseur d 'une bande (3) sous-jacente éventuelle entre le profilé (2) métallique et le panneau (1) .

6. Procédé suivant la revendication 4 ou 5 , dans lequel on choisit le matériau des premières et deuxièmes douilles (5 , 6) et leur épaisseur de paroi de manière à empêcher dans une grande mesure un écrasement des douilles (5 , 6) pendant la pose des rivets (4) aveugle.

7. Procédé suivant 1 'une des revendications 4 à 6 , dans lequel on utilise comme premières et deuxièmes douilles (5 , 6) des douilles en acier fin.
